# EUROPÄISCHE PATENTSCHRIFT

(11) **EP 1 858 730 B1**
(45) Veröffentlichungstag und Bekanntmachung des Hinweises auf die Patenterteilung: **18.02.2009**
(21) Anmeldenummer: 06722625.8
(22) Anmeldetag: 15.03.2006
(51) Int. Cl.: B60R 13/02, B60R 11/02, B62D 65/06

(54) **DACHMODUL FÜR EIN FAHRZEUG SOWIE VERFAHREN ZUR MONTAGE EINES SOLCHEN DACHMODULS**
ROOF MODULE FOR A VEHICLE AND METHOD FOR MOUNTING A ROOF MODULE OF THIS TYPE
MODULE DE TOIT ET PROCEDE DE MONTAGE D'UN TEL MODULE DE TOIT

(30) Priorität: 16.03.2005 DE 102005012122
(43) Veröffentlichungstag der Anmeldung: 28.11.2007
(73) Patentinhaber: Webasto AG, 82131 Stockdorf (DE)
(72) Erfinder: JÖHL, Anton, Dietmar, 83670 Bad Heilbrunn (DE); KLESING, Joachim, 82223 Eichenau (DE)
(86) Internationale Anmeldenummer: PCT/DE2006/000469
(87) Internationale Veröffentlichungsnummer: WO 2006/097088

(56) Entgegenhaltungen:
- EP-A- 1 099 617
- WO-A-20/04089731
- DE-A1- 19 653 431

## Beschreibung

Die vorliegende Erfindung betrifft ein Dachmodul mit dem Oberbegriff von Anspruch 1, ein Verfahren zur Montage eines solchen Dachmoduls sowie ein mit einem solchen Dachmodul versehenes Fahrzeug.

Ein gattungsgemäßes Dachmodul ist aus der DE 199 51 659 A1 bekannt, wobei die Außenschale aus einer an ihrer Innenseite ausgeschäumten starren Dachhaut besteht und wobei die Ausschäumung mit Vertiefungen versehen ist, in welche elektrische Funktionsteile, wie Lautsprecher oder Schalter, gehäuselos eingesetzt und darin durch Verrasten befestigt werden können.

In der US 6,273,499 B1 ist ein Kraftfahrzeugdach beschrieben, bei welchem elektrische Funktionselemente in den Fahrzeughimmel integriert sind und zusammen mit dem Himmel an der Dachfläche montiert werden. Ähnliche Fahrzeugdächer sind beispielsweise in der DE 38 37 171 A1, DE 196 53 431 C1 und EP 0 346 154 A2 beschrieben.

In der älteren deutschen Patentanmeldung mit dem Aktenzeichen 103 40 853 ist ein Fahrzeugdach beschrieben, bei welchem eine elektrische Funktionseinheit an der Unterseite der Dachfläche oder an einem Rahmen für eine Dachöffnung fest angebracht ist, wobei der Himmel frei von elektrischen Funktionseinheiten ist und die elektrische Funktionseinheit bezüglich des Fahrzeuginnenraums mindestens teilweise verdeckt.

Es ist Aufgabe der vorliegenden Erfindung, ein Dachmodul zu schaffen, welches für die Montage von oben in einer Karosserieöffnung geeignet ist ("Top Load"-Montage), wobei eine möglichst einfache und dennoch stabile und positionsgerechte Montage einer elektrischen Funktionseinheit im Dachbereich ermöglicht werden soll. Ferner soll ein entsprechendes Montageverfahren und ein mit einem solchen Dachmodul versehenes Fahrzeug geschaffen werden.

Diese Aufgabe wird erfindungsgemäß gelöst durch ein Dachmodul gemäß Anspruch 1, ein Montageverfahren gemäß Anspruch 21 sowie ein Fahrzeug gemäß Anspruch 27.

Bei der erfindungsgemäßen Lösung ist vorteilhaft, dass dadurch, dass die elektrische Funktionseinheit mittels der Trägereinheit zwischen einer Montageposition, in welcher die elektrische Funktionseinheit durch die Karosserieöffnung hindurchführbar ist, und einer Funktionsposition, in welcher die elektrische Funktionseinheit mindestens zum Teil an eine Begrenzung der Karosserieöffnung anlegbar ist, verstellbar ist, einerseits die elektrische Funktionseinheit bereits vor der Montage des Dachmoduls am Fahrzeug am Dachmodul vormontierbar ist, wodurch einerseits aufwendige Montageschritte wie Überkopf-Arbeiten vermieden werden können, und andererseits die elektrische Funktionseinheit trotz der Top-Load-Montage des Dachmoduls an eine Begrenzung der Karosserieöffnung anlegbar ist, um eine stabile Funktionsposition zu erreichen, in welcher die Begrenzung der Karosserieöffnung im Betrieb auf die elektrische Funktionseinheit wirkende Kräfte aufnehmen kann. Dabei kann die Funktionseinheit an der funktional günstigsten Stelle platziert werden, insbesondere auch wenn diese an oder unterhalb der Begrenzung der Karosserieöffnung liegt.Durch die Vormontage der Funktionseinheit an Dachmodul können elektrische Schnittstellen in der Dachverkabelung eingespart werden, wobei nach dem Einbau in die Karosserieöffnung lediglich die Anschlüsse zum Bordnetz hergestellt werden müssen.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- Fig. 1: eine Querschnittansicht des mit einer elektronischen Funktionseinheit versehenen Teils eines Dachmoduls gemäß einer ersten Ausführungsform der Erfindung im montierten Zustand;
- Fig. 2: eine Ansicht wie Fig. 1, wobei eine zweite Ausführungsform gezeigt ist;
- Fig. 3: eine Ansicht einer Trägereinrichtung von unten für ein erfindungsgemäßes Dachmodul;
- Fig.4: eine Ansicht wie Fig. 3, wobei eine abgewandelte Ausführungsform der Trägereinrichtung gezeigt ist;
- Fig. 5: eine Längsschnittansicht des mit einer elektrischen Funktionseinheit versehenen Teils eines erfindungsgemäßen Dachmoduls während der Montage im Bereich des vorderen Dachquerholms, wobei die elektrische Funktionseinheit in ihrer Montagestellung gezeigt ist; und
- Fig. 6: eine Ansicht wie Fig. 5, wobei die elektrische Funktionseinheit in ihrer Funktionsposition gezeigt ist.

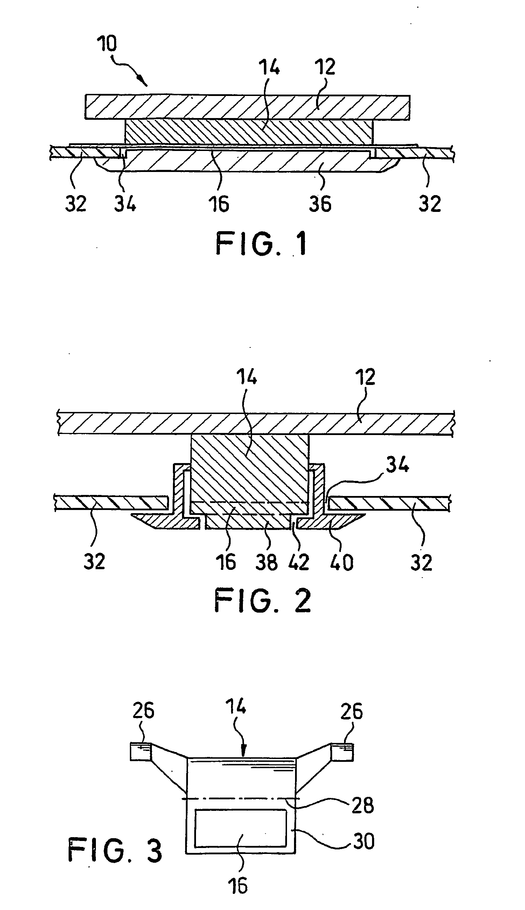

In Fig. 1 ist ein Dachmodul 10 gezeigt, welches eine feste Außenschale 12 aufweist, die mit ihren Umfangsrädem von oben in einer Karosserieöffnung eines Fahrzeugs, vorzugsweise Kraftfahrzeugs, fest montierbar ist, um das Fahrzeugdach zu bilden. Die Karosserieöffnung wird dabei von den Dachholmen, d.h. dem vorderen und dem hinteren Dachquerholm sowie den beiden Längsholmen begrenzt, wobei die Ränder der Außenschale 12 auf diese Holme aufgelegt und mit diesen fest verbunden werden, beispielsweise mittels einer Kleberaupe oder einer Schraubverbindung. Die feste Außenschale 12 kann beispielsweise an ihrer Außenseite eine feste Dachhaut aus Kunststoff, Aluminium oder Stahl umfassen, die mit einer geeigneten Trägerstruktur hinterpresst ist, z.B. einer Wabenstruktur aus Papier, Metall oder Kunststoff, die beispielsweise mittels Polyurethan stabilisiert wird. Die Trägerstruktur kann jedoch auch mittels Langfaserinjektion (LFI) aus Polyurethan gebildet werden.

An der Unterseite der festen Außenschale 12 ist eine Trägereinheit 14 vorgesehen, mittels welcher eine elektrische Funktionseinheit 16 mit der Außenschale 12 verbunden ist Die Trägereinheit 14 ist so ausgebildet, dass die elektrische Funktionseinheit 16 mittels der Trägereinheit zwischen einer Montageposition, in welcher die elektrische Funktionseinheit 16 durch die Karosserieöffnung bzw. deren Begrenzung hindurch führbar ist, und einer Funktionsposition, in welcher die elektrische Funktionseinheit 16 mindestens zum Teil an eine Begrenzung der Karosserieöffnung anlegbar ist, verstellbar ist. Grundsätzlich kann die Trägereinheit 14 so ausgebildet sein, dass die elektrische Funktionseinheit 16 zwischen der Montageposition und der Funktionsposition verschiebbar oder verschwenkbar ist. Zweckmäßigerweise ist die Funktionseinheit 16 im Falle einer Verschiebung in der Dachebene, vorzugsweise in Dachlängsrichtung, verschiebbar, während im Falle einer Schwenkbewegung die Schwenkachse zweckmäßigerweise entweder in der Dachebene liegt und dabei vorzugsweise in Dachquerrichtung verläuft oder senkrecht zu der Dachebene steht.

Die Verschiebebewegung kann beispielsweise mittels Führungsschienen realisiert werden, während die Schwenkbewegung mittels eines Scharniers oder Drehgelenks erzielt werden kann. In allen Fällen weist die Trägereinheit 14 vorzugsweise zwei entsprechend gegeneinander verstellbare Teile auf.

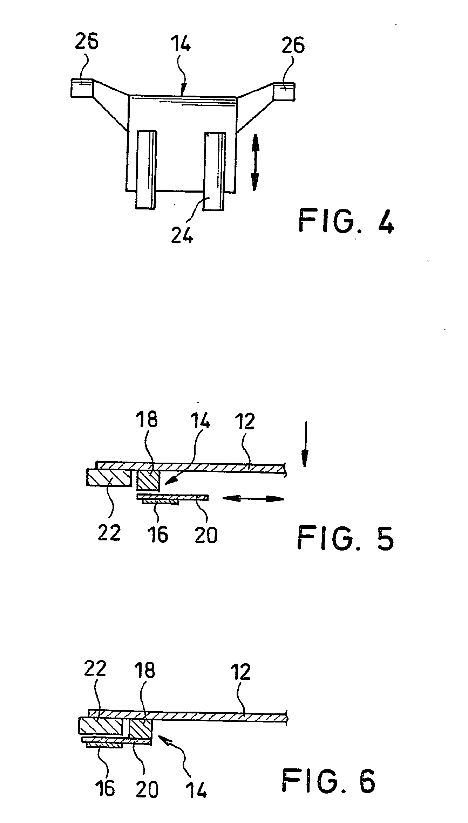

Das erfindungsgemäße Prinzip ist in Fig. 5 und Fig. 6 beispielhaft veranschaulicht, wobei die Trägereinheit 14 für eine Verschiebebewegung in Dachlängsrichtung ausgebildet ist. Dabei umfasst die Trägereinheit 14 ein oberes Teil 18, welches fest an der Unterseite der Außenschale 12 angebracht ist, und ein unteres Teil 20, welches an dem oberen Teil 18 in Dachlängsrichtung verschiebbar gelagert ist und an seiner Unterseite die elektrische Funktionseinheit 16 trägt. In Fig. 1 ist die Trägereinheit 14 in der Montageposition der Funktionseinheit 16 gezeigt, in welcher das untere Teil 20 der Trägereinheit 14 in Dachlängsrichtung nach hinten (d.h. in Fig. 5 nach rechts) verschoben ist und in dieser Stellung fixiert ist, um den Durchtritt des unteren Teils 20 und damit der Funktionseinheit 16 durch die Karosseriedachöffnung bzw. die Dachholme zu ermöglichen, wenn die Außenschale 12 von oben auf die Dachholme aufgelegt wird (siehe Pfeil in Fig. 5), wobei in Fig. 5 nur der vordere Dachquerholm 22 gezeigt ist. Die Funktionseinheit 16 ist dabei mittels der Trägereinheit 14 bereits vor Anlieferung des Dachmoduls 10 in das Automobilwerk vormontiert und vorgetestet, wobei dies aufgrund der Tatsache, dass das Dachmodul 10 noch nicht am Fahrzeug montiert ist, in vergleichsweise bequemer Weise und mit geringem Aufwand erfolgen kann, wobei insbesondere Überkopf-Arbeiten vermieden werden können und die Funktionseinheit 16 leicht zugänglich ist.

In der in Fig. 5 gezeigten Position wird die Außenschale 12 fest mit den Dachholmen verbunden, beispielsweise durch Verkleben oder Verschrauben. Nachdem das Dachmodul 10 auf diese Weise an der Fahrzeugkarosserie montiert ist, wird die Funktionseinheit 16 durch Verschieben des unteren Teils 20 der Trägereinheit 14 in Dachlängsrichtung nach vom (d.h. in Fig. 5 nach links) in die Funktionsposition gebracht, in welcher die Funktionseinheit unterhalb des Querholms 22 zu liegen kommt. Diese Position kann günstig sein, um die Aufnahme von während des Betriebs der Funktionseinheit 16 auftretenden Kräften (z.B. durch Druckknopfbetätigung von durch die Fahrzeuginsassen verursachte Kräfte) durch den Querholm 22 zu ermöglichen oder um die Funktionseinheit 16 in die für den Betrieb günstigste Position im Dachbereich zu bringen (um beispielsweise eine Leuchte oder ein Betätigungselement an der funktional günstigsten Stelle zu platzieren).

Zweckmäßigerweise ist die Funktionseinheit 16 in der Funktionsposition fixierbar, wobei dies durch eine entsprechende Ausgestaltung der Trägereinheit 14 und/oder durch eine entsprechende Fixierung an dem Querholm 22 erfolgen kann.

Die elektrische Funktionseinheit kann eines oder mehrere der folgenden Elemente aufweisen: Beleuchtungselemente, Bedienelemente, Steuerungselemente, Sensoren, Schallwandler, Anzeigeelemente sowie Sender-/Empfänger-Elemente für drahtlose Kommunikation. Insbesondere kann die Funktionseinheit 16 als integrierte Funktionseinheit mit einer gemeinsamen Leiterplatte, insbesondere einer FCP-Leiterplatte, für alle elektrischen Elemente ausgebildet sein.

In Fig. 4 eine Ansicht von unten einer Trägereinheit 14 gezeigt, wie sie bei der Ausführungsform von Fig. 5 und Fig. 6 verwendet werden kann, wobei schematisch Führungsschienen 24 angedeutet sind. Die seitlichen Vorsprünge 26 dienen zur Befestigung der Trägereinheit 14 an der Außenschale 12.

In Fig. 3 ist eine abgewandelte Ausführungsform gezeigt, wobei die Trägereinheit 14 für ein Verschwenken der Funktionseinheit 16 um eine in Dachquerrichtung verlaufende Achse 28 ausgebildet ist. Die Schwenkachse 28 kann dabei beispielsweise mittels eines Scharniers realisiert werden, wobei der die Funktionseinheit 16 tragende Teil 30 der Trägereinheit 14 sich in der Montageposition in mittels des Scharniers 28 im wesentlichen vertikal nach unten geklappter Stellung befindet und nach erfolgtem Durchtritt durch die Karosserieöffnung nach vom in eine im wesentlichen horizontale Stellung verschwenkt wird, um sich in der Funktionsstellung von unten an dem Dachquerholm 22 anzulegen.

Zweckmäßigerweise kann nach erfolgter Montage des Dachmoduls 10 in der Karosserieöffnung ein Dachhimmel 32 von unten auf der Unterseite der Außenschale 12 montiert werden, der mit einer Öffnung 34 für mindestens einen Teil der Unterseite der elektrischen Funktionseinheit 16 versehen ist. Bei der in Fig. 1 gezeigten Ausführungsform ist auf die Unterseite der Funktionseinheit 16 ein Blendenelement 36 aufsteckbar, um die Unterseite der Funktionseinheit 16 und ferner den Rand der Öffnung 34 von unten abzudecken. Falls die Funktionseinheit 16 ein Beleuchtungselement aufweist, weist die Blende 36 vorzugsweise mindestens eine Streuscheibe auf. Falls die elektrische Funktionseinheit mindestens ein Bedienelement aufweist, weist das Blendenelement 36 vorzugsweise mindestens ein Betätigungselement für dieses Bedienelement auf. Dabei kann es sich beispielsweise um Betätigungsknöpfe, Betätigungshebel, Betätigungsfelder oder ähnliches handeln.

In Fig. 2 ist eine abgewandelte Ausführungsform gezeigt, wobei hier kein Blendenelement aufgesteckt ist, sondern die Unterseite der elektrischen Funktionseinheit 16 von einem integrierten Blendenelement 38 gebildet wird. Dabei ist ein Rahmenelement 40 vorgesehen, welches eine Öffnung 42 aufweist, um das integrierte Blendenelement 38 frei zu lassen, und welches den Rand der Dachhimmelöffnung 34 von unten verdeckt. Das Rahmenelement 40 ist dabei von unten aufgesteckt.

### Bezugszeichenliste

- 10: Dachmodul
- 12: feste Außenschale
- 14: Trägereinrichtung
- 16: elektrische Funktionseinheit
- 18: oberes Teil von 14
- 20: unteres Teil von 14
- 22: vorderer Dachquerholm
- 24: Führungsschienen
- 26: Befestigungsvorsprünge
- 28: Schwenkachse
- 30: verschwenkbares Teil von 14
- 32: Dachhimmel
- 34: Öffnung in 32
- 36: aufsteckbares Blendenelement
- 38: integriertes Blendenelement
- 40: Rahmenelement
- 42: Öffnung in 40

## Patentansprüche

1. Dachmodul für ein Fahrzeug, welches von oben in einer Karosserieöffnung montierbar ist und eine feste Außenschale (12) sowie mindestens eine elektrische Funktionseinheit (16) aufweist, welche mittels einer Trägereinheit (14) an der Unterseite der Außenschale vormontiert ist, **dadurch gekennzeichnet, dass** die elektrische Funktionseinheit (16) mittels der Trägereinheit (14) zwischen einer Montageposition, in welcher die elektrische Funktionseinheit durch die Karosserieöffnung hindurchführbar ist, und einer Funktionsposition, in welcher die elektrische Funktionseinheit mindestens zum Teil an eine Begrenzung (22) der Karosserieöffnung anlegbar ist, verstellbar ist.

2. Dachmodul gemäß Anspruch 1, **dadurch gekennzeichnet, dass** die elektrische Funktionseinheit (16) mittels der Trägereinheit (14) in der Montageposition fixierbar ist.

3. Dachmodul gemäß Anspruch 1 oder 2, **dadurch gekennzeichnet, dass** die elektrische Funktionseinheit (16) mittels der Trägereinheit (14) in der Funktionsposition fixierbar ist.

4. Dachmodul gemäß einem der vorhergehenden Ansprüche, **dadurch gekennzeichnet, dass** die elektrische Funktionseinheit (16) mittels der Trägereinheit (14) zwischen der Montageposition und der Funktionsposition verschiebbar ist.

5. Dachmodul gemäß Anspruch 4, **dadurch gekennzeichnet, dass** die elektrische Funktionseinheit (16) mittels der Trägereinheit (14) zwischen der Montageposition und der Funktionsposition in der Dachebene verschiebbar ist.

6. Dachmodul gemäß Anspruch 5, **dadurch gekennzeichnet, dass** die elektrische Funktionseinheit (16) in Dachlängsrichtung verschiebbar ist.

7. Dachmodul gemäß einem der Ansprüche 1 bis 3, **dadurch gekennzeichnet, dass** die elektrische Funktionseinheit (16) mittels der Trägereinheit (14) zwischen der Montageposition und der Funktionsposition verschwenkbar ist.

8. Dachmodul gemäß Anspruch 7, **dadurch gekennzeichnet, dass** die elektrische Funktionseinheit (16) mittels der Trägereinheit (14) zwischen der Montageposition und der Funktionsposition um eine in der Dachebene liegende Achse (28) verschwenkbar ist.

9. Dachmodul gemäß Anspruch 8, **dadurch gekennzeichnet, dass** die Schwenkachse (28) in Dachquerrichtung verläuft.

10. Dachmodul gemäß Anspruch 7, **dadurch gekennzeichnet, dass** die elektrische Funktionseinheit (16) mittels der Trägereinheit (14) zwischen der Montageposition und der Funktionsposition um eine senkrecht zu der Dachebene stehende Achse verschwenkbar ist.

11. Dachmodul gemäß einem der vorhergehenden Ansprüche, **dadurch gekennzeichnet, dass** die elektrische Funktionseinheit (16) von unten an die Begrenzung (22) der Karosserieöffnung anlegbar ist.

12. Dachmodul gemäß einem der vorhergehenden Ansprüche, **dadurch gekennzeichnet, dass** es sich bei der Begrenzung der Karosserieöffnung um den vorderen Dachquerholm (22) handelt.

13. Dachmodul gemäß einem der vorhergehenden Ansprüche, **dadurch gekennzeichnet, dass** elektrische Funktionseinheit (16) an der Begrenzung (22) der Karosserieöffnung fixierbar ist.

14. Dachmodul gemäß einem der vorhergehenden Ansprüche, **dadurch gekennzeichnet, dass** die elektrische Funktionseinheit (16) mindestens eines der folgenden Elemente aufweist: Beleuchtungselemente, Bedienelemente, Steuerungselemente, Sensoren, Schallwandler, Anzeigelemente, Sender-/Empfänger-Elemente für drahtlose Kommunikation.

15. Dachmodul gemäß einem der vorhergehenden Ansprüche, **dadurch gekennzeichnet, dass** die Unterseite der elektrischen Funktionseinheit (16) in der Funktionsposition mittels eines von unten aufsteckbaren Blendenelements (36) abdeckbar ist.

16. Dachmodul gemäß einem der Ansprüche 1 bis 14, **dadurch gekennzeichnet, dass** die Unterseite der elektrischen Funktionseinheit (16) von einem integrierten Blendenelement (38) gebildet wird.

17. Dachmodul gemäß Anspruch 15 oder 16, **dadurch gekennzeichnet, dass** die elektrische Funktionseinheit (16) mindestens ein Beleuchtungselement aufweist und das Blendenelement mindestens eine Streuscheibe aufweist.

18. Dachmodul gemäß Anspruch 15 oder 16, **dadurch gekennzeichnet, dass** die elektrische Funktionseinheit (16) mindestens ein Bedienelement aufweist und das Blendenelement mindestens ein Betätigungselement für das Bedienelement aufweist.

19. Dachmodul gemäß einem der vorhergehenden Ansprüche, **dadurch gekennzeichnet, dass** mindestens eine elektrische Schnittstelle vorgesehen ist, um die Funktionseinheit (16) mit dem Bordnetz des Fahrzeugs zu verbinden.

20. Dachmodul gemäß einem der vorhergehenden Ansprüche, **dadurch gekennzeichnet, dass** an das in der Karosserieöffnung angebrachte Dachmodul (10) ein Dachhimmel (32) von unten auf der Unterseite der Außenschale (12) montiert ist, der mit einer Öffnung (34) für mindestens einen Teil der Unterseite der elektrischen Funktionseinheit (16) versehen ist.

21. Verfahren zur Montage eines Dachmoduls (10) gemäß einem der vorhergehenden Ansprüche, wobei die elektrische Funktionseinheit (16) mittels der Trägereinheit (14) an der Unterseite der Außenschale (12) vormontiert und in die Montageposition gebracht wird, das Dachmodul von oben in der Karosserieöffnung montiert wird, wobei die elektrische Funktionseinheit durch die Karosserieöffnung hindurchgeführt wird, und die elektrische Funktionseinheit mittels der Trägereinheit aus der Montagestellung in die Funktionsposition zur Anlage an der Begrenzung (22) der Karosserieöffnung gebracht wird.

22. Verfahren gemäß Anspruch 21, **dadurch gekennzeichnet, dass** in der Funktionsposition auf die Unterseite der elektrischen Funktionseinheit (16) von unten ein Blendenelement (36) aufgesteckt wird, um die Unterseite der elektrischen Funktionseinheit abzudecken.

23. Verfahren gemäß Anspruch 21 oder 22, **dadurch gekennzeichnet, dass** nach der Montage des Dachmoduls (10) in der Karosserieöffnung auf der Unterseite der Außenschale (12) ein Dachhimmel (32) von unten montiert wird, der mit einer Öffnung (34) für mindestens einen Teil der Unterseite der elektrischen Funktionseinheit (16) versehen ist.

24. Verfahren gemäß Anspruch 23, sofern auf Anspruch 22 rückbezogen, **dadurch gekennzeichnet, dass** das Blendenelement (36) nach dem Aufstecken auf die Unterseite der elektrischen Funktionseinheit (16) den Rand der Öffnung (34) des Dachhimmels (32) von unten verdeckt.

25. Verfahren gemäß Anspruch 23, sofern auf Anspruch 21 rückbezogen, **dadurch gekennzeichnet, dass** die Unterseite der elektrischen Funktionseinheit (16) von einem integrierten Blendenelement (38) gebildet wird, wobei ein Rahmenelement (40) von unten auf die Unterseite der elektrischen Funktionseinheit aufgesteckt wird, welches eine Öffnung (42) aufweist, um das Blendenelement freizulassen, und welches den Rand der Öffnung (34) des Dachhimmels (32) von unten verdeckt.

26. Verfahren gemäß einem der Ansprüche 21 bis 25, **dadurch gekennzeichnet, dass** das Dachmodul (10) bei der Montage mit der Begrenzung (22) der Karosserieöffnung verklebt oder verschraubt wird.

27. Fahrzeug, an welchem ein Dachmodul (10) gemäß einem der Ansprüche 1 bis 20 montiert ist.

## Claims

1. Roof module for a vehicle, which can be mounted from above in an opening in the bodywork and which comprises a hard outer shell (12) and at least one electric functional unit (16) which is pre-installed on the underside of the outer shell by means of a support unit (14), **characterized in that** the electric functional unit (16) can be adjusted by means of the support unit (14) between a mounted position in which the electric functional unit is fed through the opening in the bodywork and a functional position in which the electric functional unit can be placed at least partially against a boundary (22) of the opening in the bodywork.

2. Roof module according to Claim 1, **characterized in that** the electric functional unit (16) can be secured in the mounted position by means of the support unit (14).

3. Roof module according to Claim 1 or 2, **characterized in that** the electric functional unit (16) can be secured in the functional position by means of the support unit (14).

4. Roof module according to one of the preceding claims, **characterized in that** the electric functional unit (16) can be displaced between the mounted position and the functional position by means of the support unit (14).

5. Roof module according to Claim 4, **characterized in that** the electric functional unit (16) can be displaced between the mounted position and the functional position in the plane of the roof by means of the support unit (14).

6. Roof module according to Claim 5, **characterized in that** the electric functional unit (16) can be displaced in the longitudinal direction of the roof.

7. Roof module according to one of Claims 1 to 3, **characterized in that** the electric functional unit (16) can be pivoted between the mounted position and the functional position by means of the support unit (14).

8. Roof module according to Claim 7, **characterized in that** the electric functional unit (16) can be pivoted between the mounted position and the functional position about an axis (28) lying in the plane of the roof, by means of the support unit (14).

9. Roof module according to Claim 8, **characterized in that** the pivoting axis (28) runs in the transverse direction of the roof.

10. Roof module according to Claim 7, **characterized in that** the electric functional unit (16) can be pivoted between the mounted position and the functional position about an axis which is perpendicular to the plane of the roof, by means of the support unit (14).

11. Roof module according to one of the preceding claims, **characterized in that** the electric functional unit (16) can be placed from below against the boundary (22) in the opening in the bodywork.

12. Roof module according to one of the preceding claims, **characterized in that** the boundary of the opening in the bodywork is the front roof transverse beam (22).

13. Roof module according to one of the preceding claims, **characterized in that** the electric functional unit (16) can be secured to the boundary (22) of the opening in the bodywork.

14. Roof module according to one of the preceding claims, **characterized in that** the electric functional unit (16) has at least one of the following elements: lighting elements, operator control elements, control elements, sensors, sound transducers, display elements, transmitter/receiver elements for wireless communication.

15. Roof module according to one of the preceding claims, **characterized in that** the underside of the electric functional unit (16) can be covered in the functional position by means of a panel element (36) which can be plugged on from below.

16. Roof module according to one of Claims 1 to 14, **characterized in that** the underside of the electric functional unit (16) is formed by an integrated panel element (38).

17. Roof module according to Claim 15 or 16, **characterized in that** the electric functional unit (16) has at least one lighting element, and the panel element has at least one diffusing screen.

18. Roof module according to Claim 15 or 16, **characterized in that** the electric functional unit (16) has at least one operator control element, and the panel element has at least one activation element for the operator control element.

19. Roof module according to one of the preceding claims, **characterized in that** at least one electrical interface is provided in order to connect the functional unit (16) to the on-board electrical system of the vehicle.

20. Roof module according to one of the preceding claims, **characterized in that** in the roof module (10) placed in the opening in the bodywork, a roof inner lining (32) is mounted from below on the underside of the outer shell (12), said roof inner lining (32) being provided with an opening (34) for at least part of the underside of the electric functional unit (16).

21. Method for mounting a roof module (10) according to one of the preceding claims, wherein the electric functional unit (16) is pre-installed on the underside of the outer shell (12) and is placed in the mounted position by means of the support unit (14), and the roof module is mounted from above in the opening in the bodywork, wherein the electric functional unit is fed through the opening in the bodywork and the electric functional unit is moved by means of the support unit from the mounted position into the functional position in order to bear against the boundary (22) of the opening in the bodywork.

22. Method according to Claim 21, **characterized in that**, in the functional position, a panel element (36) is plugged from below onto the underside of the electric functional unit (16) in order to cover the underside of the electric functional unit.

23. Method according to Claim 21 or 22, **characterized in that**, after the roof module (10) has been mounted in the opening in the bodywork, a roof inner lining (32) is mounted from below on the underside of the outer shell (12), said roof inner lining (32) being provided with an opening (34) for at least part of the underside of the electric functional unit (16).

24. Method according to Claim 23, insofar as it is referred back to Claim 22, **characterized in that** after the panel element (36) has been plugged onto the underside of the electric functional unit (16) it covers the edge of the opening (34) in the roof inner lining (32) from below.

25. Method according to Claim 23, insofar as it is referred back to Claim 21, **characterized in that** the underside of the electric functional unit (16) is formed by an integrated panel element (38), wherein a frame element (40) is plugged onto the underside of the electric functional unit from below, which frame element (40) has an opening (42) in order to expose the panel element and which covers the edge of the opening (34) in the roof inner lining (32) from below.

26. Method according to one of Claims 21 to 25, **characterized in that** when the roof module (20) is mounted it is bonded or screwed to the boundary (22) of the opening in the bodywork.

27. Vehicle on which a roof module (10) according to one of Claims 1 to 20 is mounted.

## Revendications

1. Module de toit pour un véhicule, qui peut être monté par en haut dans une ouverture de carrosserie et comporte une coque extérieure (12) fixe ainsi qu'au moins une unité fonctionnelle électrique (16) prémontée sur le côté inférieur de la coque extérieure à l'aide d'une unité de support (14), **caractérisé en ce que** l'unité fonctionnelle électrique (16) peut être déplacée à l'aide de l'unité de support (14) entre une position de montage dans laquelle l'unité fonctionnelle électrique est introduite à travers l'ouverture de carrosserie et une position fonctionnelle dans laquelle l'unité fonctionnelle électrique peut être disposée au moins en partie au niveau d'une limite (22) de l'ouverture de carrosserie.

2. Module de toit selon la revendication 1, **caractérisé en ce que** l'unité fonctionnelle électrique (16) peut être fixée dans la position de montage à l'aide de l'unité de support (14).

3. Module de toit selon la revendication 1 ou 2, **caractérisé en ce que** l'unité fonctionnelle électrique (16) peut être fixée dans la position fonctionnelle à l'aide de l'unité de support (14).

4. Module de toit selon l'une quelconque des revendications précédentes, **caractérisé en ce que** l'unité fonctionnelle électrique (16) peut être déplacée entre la position de montage et la position fonctionnelle à l'aide de l'unité de support (14).

5. Module de toit selon la revendication 4, **caractérisé en ce que** l'unité fonctionnelle électrique (16) peut être déplacée dans le plan du toit entre la position de montage et la position fonctionnelle à l'aide de l'unité de support (14).

6. Module de toit selon la revendication 5, **caractérisé en ce que** l'unité fonctionnelle électrique (16) peut être déplacée dans la direction longitudinale du toit.

7. Module de toit selon l'une quelconque des revendications 1 à 3, **caractérisé en ce que** l'unité fonctionnelle électrique (16) peut être pivotée entre la position de montage et la position fonctionnelle à l'aide de l'unité de support (14).

8. Module de toit selon la revendication 7, **caractérisé en ce que** l'unité fonctionnelle électrique (16) peut être pivotée autour d'un axe (28) situé dans le plan du toit entre la position de montage et la position fonctionnelle à l'aide de l'unité de support (14).

9. Module de toit selon la revendication 8, **caractérisé en ce que** l'axe de pivotement (28) se situe dans la direction transversale du toit.

10. Module de toit selon la revendication 7, **caractérisé en ce que** l'unité fonctionnelle électrique (16) peut être pivotée autour d'un axe perpendiculaire au plan du toit entre la position de montage et la position fonctionnelle à l'aide de l'unité de support (14).

11. Module de toit selon l'une quelconque des revendications précédentes, **caractérisé en ce que** l'unité fonctionnelle électrique (16) peut être amenée par en bas contre la limite (22) de l'ouverture de carrosserie.

12. Module de toit selon l'une quelconque des revendications précédentes, **caractérisé en ce que** la limite de l'ouverture de carrosserie est une traverse de toit (22) avant.

13. Module de toit selon l'une quelconque des revendications précédentes, **caractérisé en ce que** l'unité fonctionnelle électrique (16) peut être fixée à la limite (22) de l'ouverture de carrosserie.

14. Module de toit selon l'une quelconque des revendications précédentes, **caractérisé en ce que** l'unité fonctionnelle électrique (16) comporte au moins un des éléments suivants : éléments d'éclairage, éléments de commande, éléments de réglage, capteurs, transducteurs acoustiques, éléments d'affichage, éléments d'émission/réception pour la communication sans fil.

15. Module de toit selon l'une quelconque des revendications précédentes, **caractérisé en ce que** le côté inférieur de l'unité fonctionnelle électrique (16) peut être recouvert dans la position fonctionnelle à l'aide d'un élément de cache (36) enfichable par le bas.

16. Module de toit selon l'une quelconque des revendications 1 à 14, **caractérisé en ce que** le côté inférieur de l'unité fonctionnelle électrique (16) est formé par un élément de cache (38) intégré.

17. Module de toit selon la revendication 15 ou 16, **caractérisé en ce que** l'unité fonctionnelle électrique (16) comporte au moins un élément d'éclairage et **en ce que** l'élément de cache comporte au moins une glace de diffusion.

18. Module de toit selon la revendication 15 ou 16, **caractérisé en ce que** l'unité fonctionnelle électrique (16) comporte au moins un élément de commande et **en ce que** l'élément de cache comporte au moins un élément d'actionnement pour l'élément de commande.

19. Module de toit selon l'une quelconque des revendications précédentes, **caractérisé en ce qu'**au moins une interface électrique est prévue pour relier l'unité fonctionnelle (16) au réseau de bord du véhicule.

20. Module de toit selon l'une quelconque des revendications précédentes, **caractérisé en ce qu'**un habillage de plafond (32) est monté par en bas sur le côté inférieur de la coque extérieure (12) au niveau du module de toit (10) disposé dans l'ouverture de carrosserie, ledit habillage étant pourvu d'une ouverture (34) pour au moins une partie du côté inférieur de l'unité fonctionnelle électrique (16).

21. Procédé de montage d'un module de toit (10) selon l'une quelconque des revendications précédentes, l'unité fonctionnelle électrique (16) étant prémontée sur le côté inférieur de la coque extérieure (12) à l'aide de l'unité de support (14) et amenée dans la position de montage, le module de toit étant monté par en haut dans l'ouverture de carrosserie, l'unité fonctionnelle électrique étant introduite à travers l'ouverture de carrosserie et l'unité fonctionnelle électrique étant amenée de la position de montage dans la position fonctionnelle à l'aide de l'unité de support pour être positionnée au niveau de la limite (22) de l'ouverture de carrosserie.

22. Procédé selon la revendication 21, **caractérisé en ce qu'**un élément de cache (36) est inséré par en bas sur le côté inférieur de l'unité fonctionnelle électrique (16) dans la position fonctionnelle, pour recouvrir le côté inférieur de l'unité fonctionnelle électrique.

23. Procédé selon la revendication 21 ou 22, **caractérisé en ce qu'**un habillage de plafond (32) est monté par en bas après le montage du module de toit (10) dans l'ouverture de carrosserie sur le côté inférieur de la coque extérieure (12), ledit habillage étant pourvu d'une ouverture (34) pour au moins une partie du côté inférieur de l'unité fonctionnelle électrique (16).

24. Procédé selon la revendication 23, en référence à la revendication 22, **caractérisé en ce que** l'élément de cache (36) recouvre par en bas le bord de l'ouverture (34) de l'habillage de plafond (32) après avoir été placé sur le côté inférieur de l'unité fonctionnelle électrique (16).

25. Procédé selon la revendication 23, en référence à la revendication 21, **caractérisé en ce que** le côté inférieur de l'unité fonctionnelle électrique (16) est formé par un élément de cache (38) intégré, un élément d'encadrement (40) étant inséré par en bas sur le côté inférieur de l'unité fonctionnelle électrique, ledit élément comportant une ouverture (42) pour laisser libre l'élément de cache et recouvrant par en bas le bord de l'ouverture (34) de l'habillage de plafond (32).

26. Procédé selon l'une quelconque des revendications 21 à 25, **caractérisé en ce que** le module de toit (10) est collé ou vissé à la limite (22) de l'ouverture de carrosserie lors du montage.

27. Véhicule sur lequel un module de toit (10) selon l'une quelconque des revendications 1 à 20 est monté.
